# EUROPEAN PATENT APPLICATION

(11) **EP 1 647 217 A1**
(43) Date of publication of application: **19.04.2006**
(21) Application number: 05077336.5
(22) Date of filing: 12.10.2005
(51) Int. Cl.: A47J 43/046

(54) **Multi-purpose kitchen appliance**

(30) Priority: 15.10.2004 CH 17002004
(71) Applicant: Bionicum Establishment, 9490 Vaduz (LI)
(72) Inventor: Robbiani, Sandro, 6534 San Vittore (CH)
(74) Representative: Fiammenghi-Domenighetti, Delfina

(57) **Abstract**

The multi-purpose kitchen appliance with heated receptacle (6), mainly for cooking, kneading, shredding, mincing, beating and preparing creams is composed of a base fixed by a separable joining system to the casing (3) having, mounted inside it, the electronic weighing unit (17), the operating unit (8) operated by the motor unit at a continuously adjustable number of revolutions, and the electric resistance unit (7) with adjustable heating temperature and is also equipped with a panel (67) for controlling operation thereof, is characterized in that the casing (3) together with its equipment rests on the electronic weighing unit (17), while the operating unit (8) as well as the clutch (9) which couples it to the electric motor (12) are arranged in alignment along a single vertical axis; while the electric resistance unit (7) which surrounds the bottom part of the receptacle (6) is provided with an electric surface heating resistance (81). Its casing (3) has a segmented structure consisting of the bottom external profile (43) connected by means of the central profile composed of two parts (44) and (45) to the upper external profile (46) inside which the receptacle (6) is housed; the profiles (43), (44), (45) and (46) of the casing (3) are joined together by means of separable joining devices.

## Description

The invention relates to a multi-purpose kitchen appliance for cooking food, kneading, mixing, cutting, beating and preparing creams.

Many technical solutions for multi-purpose kitchen appliances are known, some of these performing functions such as mixing, beating and kneading.

The description of European patent EP 0,570,685 A1 discloses a kitchen robot which is driven by an electric motor via its shaft and two driven shafts on bearings along a common axis, rotating at different angular velocities. The driving motor has a toothed pulley with a constant diameter and a thickness such as to allow the positioning of two toothed belts; the two propulsion shafts are equipped with pulleys of varying diameter and operated by two separate toothed belts. The adjustment of the belt tension between the driving shaft and the first propulsion shaft is performed by means of the relative and parallel displacement of the motor and subsequent fixing thereof in a position such as to ensure the required tension of the abovementioned belt. The adjustment of the tension of the belt between the drive shaft and the second driven shaft is performed by means of roller-type belt tensioner on an off-centre shaft fixed to the casing. The first driven shaft is housed inside the second (tubular) shaft and has a greater angular velocity; the second driven shaft is housed directly inside the support of the transmission system and has a smaller angular velocity.

The description of European Patent EP 0,570,758 discloses a "mixing and whipping tool for a kitchen robot", consisting of a casing housing a drive shaft and a driven shaft inclined with respect to the drive shaft. A two-stage epicyclic gear is located on the driven shaft and its first-stage toothed wheel interacts with the first toothed wheel splined onto the drive shaft. The second-stage wheel of the abovementioned gear meshes with the second wheel of the shaft which terminates at the top in a spline and is positioned with play on the drive shaft. A terminal for joining with the shaft projecting from the bottom of the casing is screwed onto the bottom of the drive shaft. The working tools (whippers, beaters, etc.) are housed on the bottom of the driven shaft.

The description of European patent EP 1,236,678 A2 discloses a kitchen appliance composed of a casing and, positioned thereon, a receptacle heated at the bottom. The casing houses the system for operating the mixer which is situated inside the receptacle. The appliance is supported by three feet which are arranged symmetrically and have weighing devices incorporated in them. The total weight of the appliance is distributed over three feet and the values detected on the feet are added together in order to determine said weight.

The scales device is composed of a ceramic plate with two resistors sliding depending on the pressure and two fixed resistors which are connected in a bridge arrangement. The plate has the form of a pan on the bottom of which these resistors are located, on the inside said resistors being directed towards the casing of the appliance and on the outside, opposite the resistors, there being a pressure element with a stem-like terminal in contact with the bottom of the plate, thus acting on the bridge system of the plate and varying its resistance.

The description of European patent No. 0,966,909 A2 discloses a kitchen appliance with a mixing receptacle heated at the bottom and with a mixer which is operated on the inside of the receptacle. The mixing steps are performed at intervals with adjustable pause periods, these being used during the preparation of mixtures. In this appliance, when the mechanical resistance of the mixer results in a reduction in the number of revolutions, equivalent to 1/3rd, compared to those due to the electric power consumption, the pause periods during operation are applied and are used to achieve the forced cooling of the motor. The pause periods have a duration equal to three times the operating periods. Moreover, the machine may be used for mixing/kneading only if the heating temperature is set to below the limit temperature of 70°C. The increase in the pre-set speed occurs in relation to the pre-set value and is initially slow and then fast and the heating is dependent upon the rate of increase of the temperature and the content of the receptacle. Moreover, the heating is regulated by proportionality factors chosen on the basis of the desired temperature. The heating takes place via electric resistors and the power used is regulated in each case with a time interval corresponding to the power, for example every 15 seconds.

Moreover, the description of German patent DE-A14,414,821 discloses a cooking appliance with receptacle for mixing, in which closing of this receptacle is performed by means of a lid which is axially sealed and closed onto the receptacle by means of a bayonet-type closing system. The bayonet-type closure of the lid is performed with a manual lever projecting from the handle of the receptacle, having an extension coaxial with the axis of rotation of the lever in the handle. The extension acts together with the actuating rod which rotates about its axis and by means of which closing of the bayonet-type lock causes locking of the lid with respect to the mixing receptacle of the machine.

The description of Polish patent 176041 discloses a multi-purpose appliance for preparing mixtures, creams and for beating, consisting of a base with detachable fastening devices between the receptacle and the machine body inside which there is the operating system which, via the clutch, is connected to the propulsion system of the mixer equipped with a gearwheel drive which is pivotably mounted on shafts and the drive shaft of which is mounted with play in a coupling provided with a second-stage ring gear of the gearing and terminating in a splining of the shaft which is used to mount the lid of the receptacle in a suitable seat. Moreover, this appliance has an intermediate shaft which is supported on bearings inside the mixer casing and on which, in the splined central part, there is a two-stage gear. This lower gear meshes with the support shaft which is also supported inside the mixer casing via a gear on the clutch splining supported at the bottom of the mixer and a second-stage gear of the intermediate shaft meshed with a gear which locks the coupling terminating in a spline, and the axes of rotation of the clutch of the intermediate shaft and the support shaft are parallel.

A multi-purpose appliance made by the German company Vorwerk and known by the name of Thermomix has a spacious casing provided with a control panel on which a Varoma adapter for steam cooking or a receptacle closed with a lid and provided with a handle rests. The appliance is equipped with an operating unit and a regulator for the speed, temperature and heating time.

The essential feature of this multi-purpose kitchen appliance with the heated receptacle consists in the base connected to a casing inside which the following are positioned: the weighing unit, the operating unit operated by a motor unit with continuous adjustment of the speed, the electric resistance with regulation of the heating temperature and equipped with a control panel as per the invention, characterized in that its casing with all the internal fittings rests on the electronic weighing unit, and the operating unit together with the clutch which links it to the motor are positioned along a single, common, vertical axis, and the heating electric resistance unit embraces the bottom part of the receptacle and is provided with a surface resistance. The casing has a segmented constructional design and is formed by a bottom outer profile connected by the middle profile consisting of two parts to the upper outer profile inside which the receptacle is housed. All these components are connected in a detachable manner.

The appliance is equipped with an electronic weighing unit composed of a base where four identical electronic weighing mechanisms are arranged. The base has the form of a circular plate with a ribbed surface and its annular inner rib has two pairs of arms perpendicular to the main axes of the base and located at mutually opposite poles, provided with internal recesses inside which four electronic weighing mechanisms are housed, these being composed of a base on which there rests a support provided with a fixed magnet in front of which a support with a Hall sensor module and, adjacent thereto, a magnetic screen are positioned, these two supports being connected by means of two flat springs. Moreover, the appliance is equipped with an electric resistance unit composed of a tubular casing with a conical profile and with a cylindrical part on the external surface on which the surface resistance protected by a metal screen is fixed. The surface resistance is composed of a strip which on its surface has a resistive track with contact areas at its terminals on which the contacts with the connectors are positioned. The track has a perimetral insulation and the edges of the strip have the holes for engaging the fixing spring and in the middle of them there is a bimetallic element with a temperature sensor fixed to the casing. Moreover, the appliance is equipped with a support for the fixing unit of the electric motor and support for the heating resistance unit which has an axial hole and U-shaped perimetral axially offset portion with mounting holes for fixing the motor connected by means of a pulse emitter coupled with the speed sensor of the motor via a clutch to the operating unit of the appliance; the abovementioned support is supported with the aid of adjustable tie rods, the bottom ends of which are fastened to the screws which join together all the parts of the appliance casing and those parts above the profile flange. The system for controlling operation of the appliance, according to the invention, consists of a control module equipped with a power supplier connected to the electric drive motor of the operating unit, to the electric motor of the fan, to the surface heating resistance and to its thermal protection system; the control module is connected electrically to the module of the microprocessor, the respective inputs of which are connected to the temperature sensor of the electric motor, to the speed sensor of the electric motor, to the group of sensors of the electronic weighing mechanisms, to the sensor for fixing the lid of the appliance, to the acoustic signalling device, to the temperature sensor of the electric surface heating resistance, to the receptacle sensor, to the keypad unit, to the device for entering the value of the individual parameters and to the LCD display with the numbers and pictograms. The keypad unit is equipped with keys for controlling this system.

The design of the multi-purpose kitchen appliance according to the invention, the operating unit and the motor unit of which are located on a single vertical axis, has made it possible to eliminate further transmission systems therefrom and to obtain a structure which is much simpler and more compact compared to the already known appliances of this type, while the use of the support for the motor fixing unit supported by the tie rods fastened to the upper flange of the profiling has considerably simplified the assembly of this appliance. The use of the electric surface heating resistance instead of the heating resistances used hitherto has made it possible to achieve the uniform distribution of the heat over the surface of the receptacle with the consequent notable reduction in the temperature of this resistance which in turn has enabled simplification of the insulating elements and the use of plastic materials for production of most of the casing, as well as elimination of the metal parts used hitherto. The separable joining system of the four electronic weighing mechanisms based on application of the principle of variability of the magnetic field with arms located uniformly over the perimeter of their common base constrained to the casing of the appliance has made it possible to obtain a simple structure of the weighing unit with a high precision and reliability of operation thereof. Moreover the control system used in the appliance offers the user the possibility of programming individually the recipes and preparing the dishes, while choosing the appropriate program implements the stored settings of given recipes.

The subject of the invention is shown by way of example of embodiment in the drawings, in which:

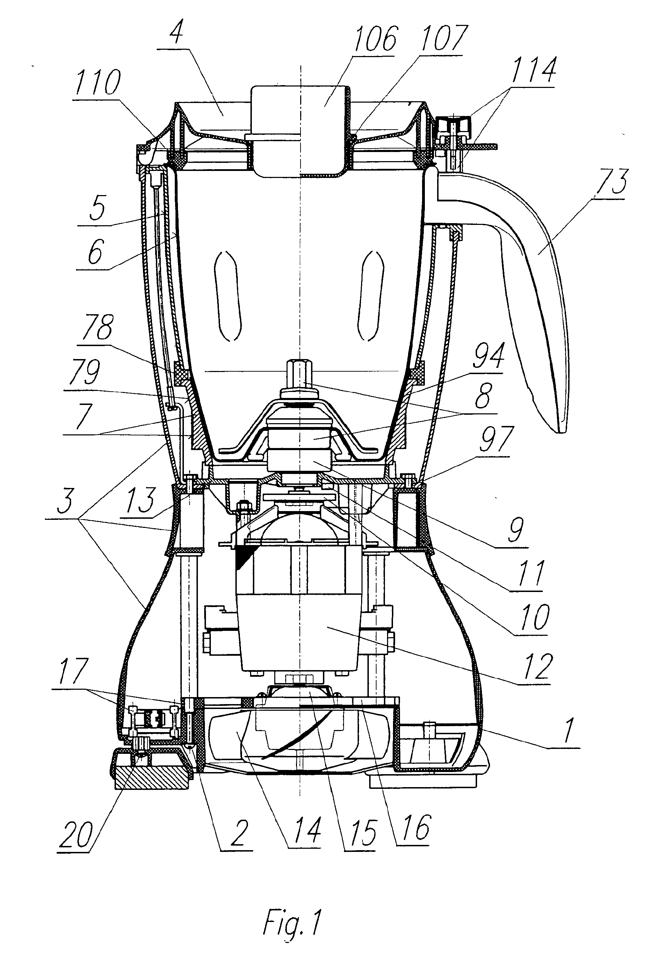

Fig. 1 shows an axial cross-section of the multi-purpose kitchen appliance;

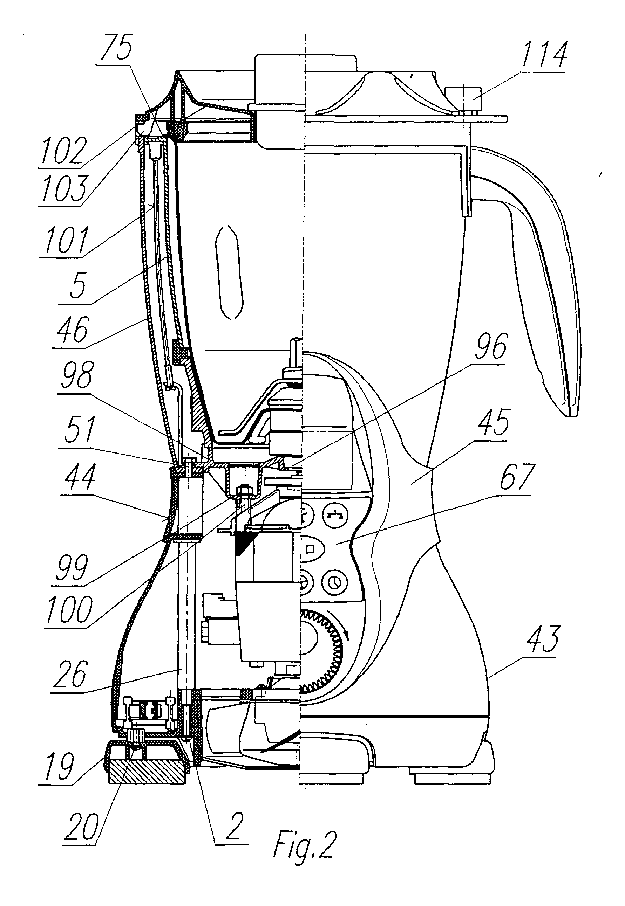

Fig. 2 shows an axial half-sectioned half-view of the same appliance;

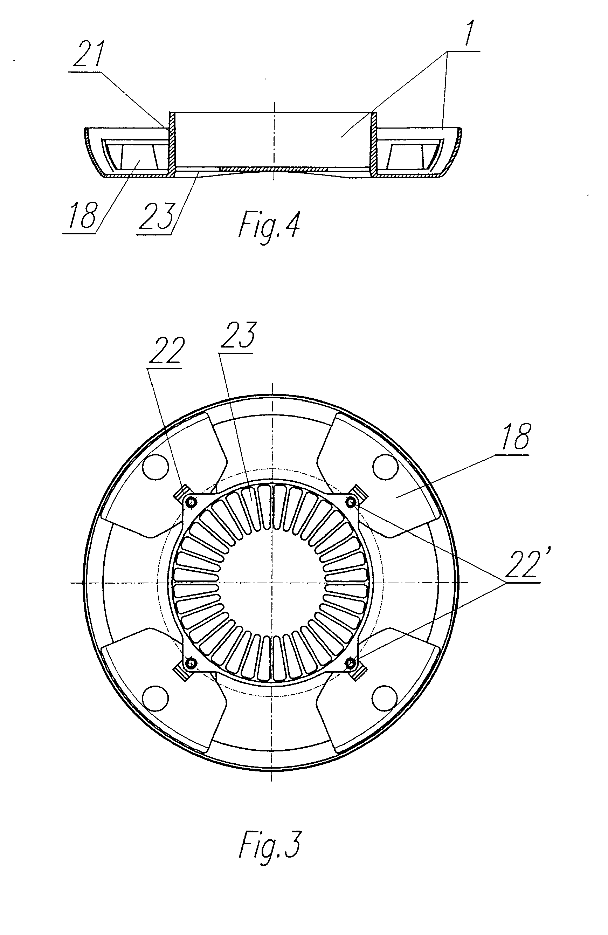

Fig. 3 shows a view, from above, of the base of the appliance;
Fig. 4 shows an axial cross-section of the same base;

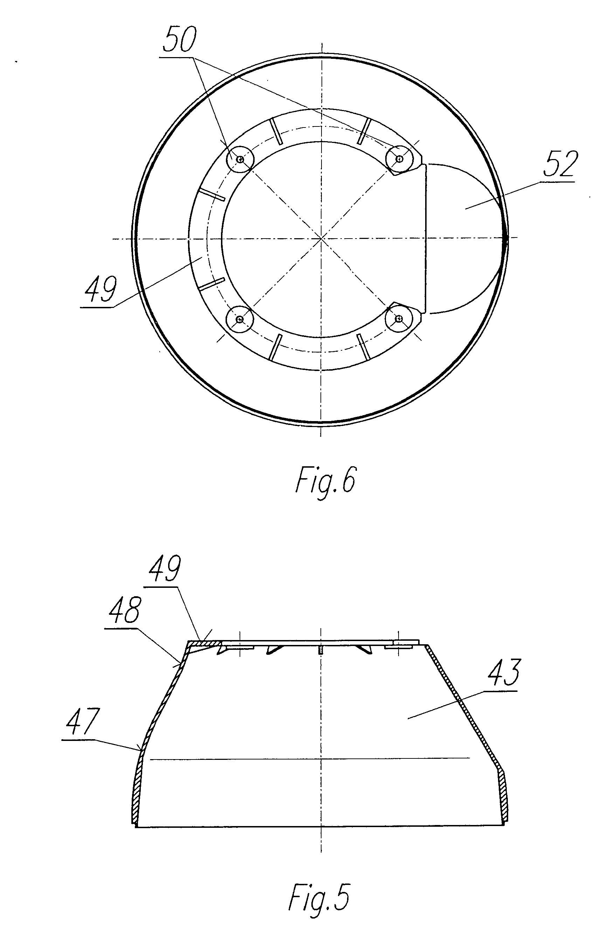

Fig. 5 shows an axial cross-section of the outer bottom profile;
Fig. 6 shows a view, from above, of the same profile;

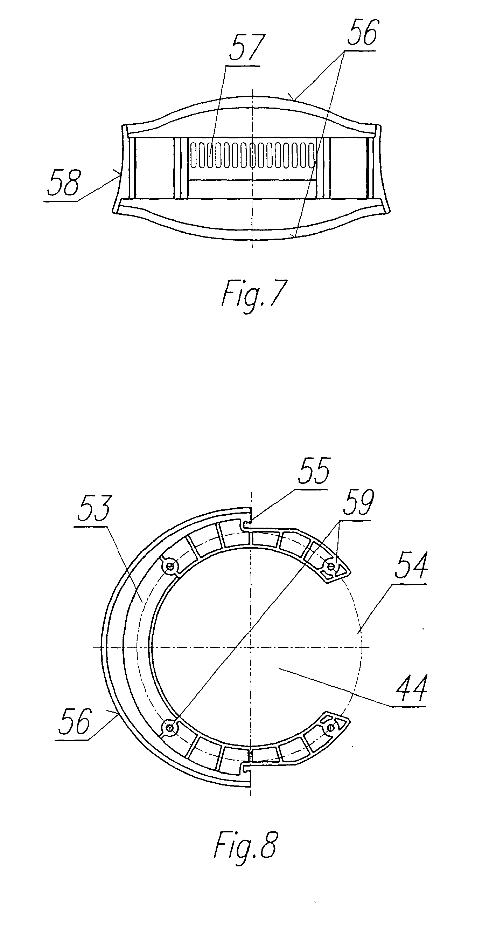

Fig. 7 shows a front view of the rear central profile of the appliance;
Fig. 8 shows a view, from above, of the same profile;

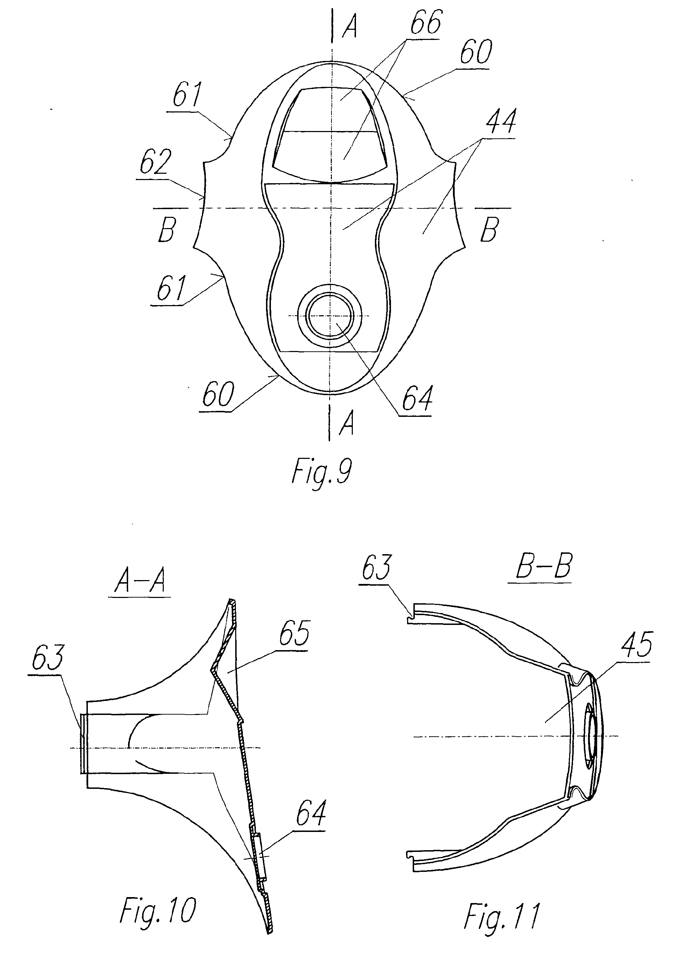

Fig. 9 shows a front view of the front central profile;
Fig. 10 shows a cross-sectional view of the same profile along the line A-A;
Fig. 11 shows a cross-sectional view of the same profile along the line B-B;

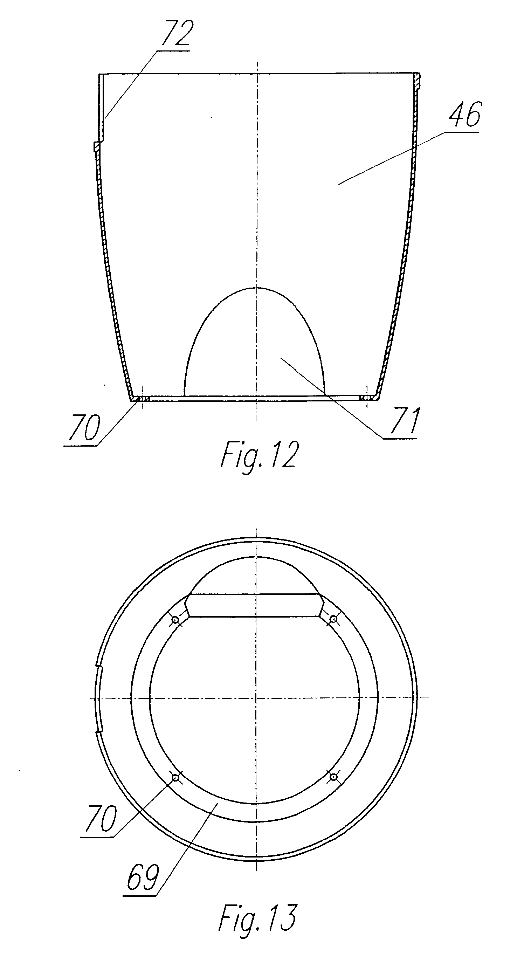

Fig. 12 shows an axial cross-section of the upper profile of the appliance;
Fig. 13 shows a view, from above, of the same profile;

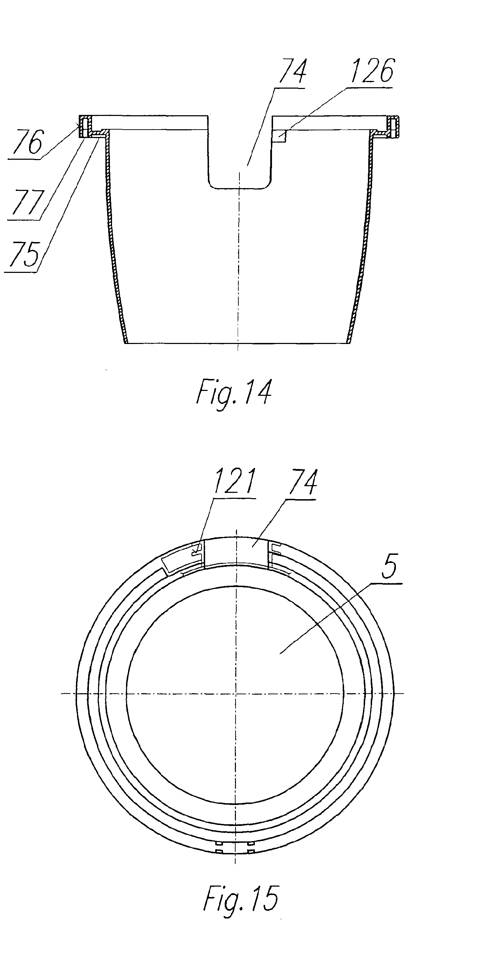

Fig. 14, 15 show a front view and a view from above relating to details of the upper portion of the multiporpose kitchen appliance of the invention;

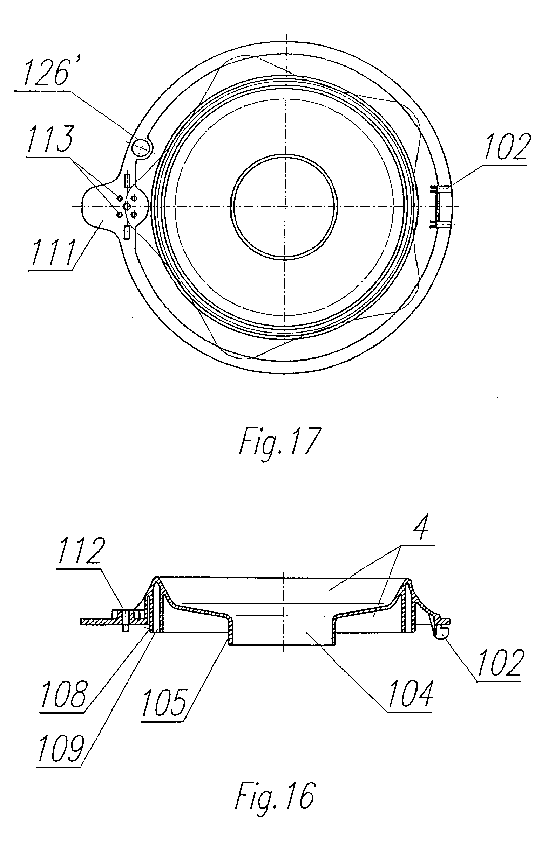

Fig. 16 shows an axial cross-section of the lid;
Fig. 17 shows a view, from below, of the same lid;

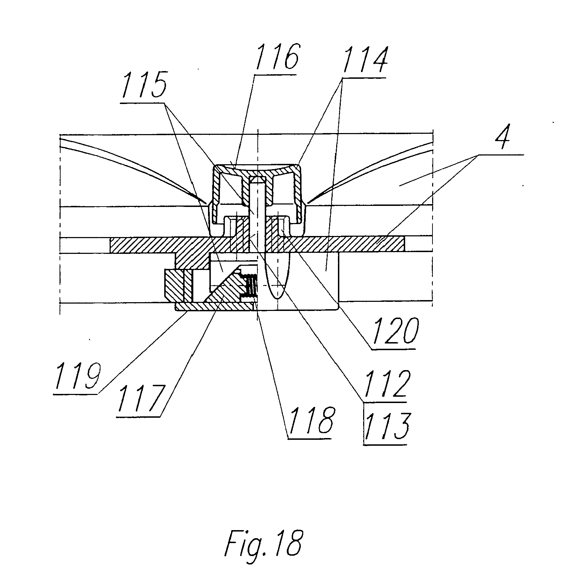

Fig. 18 shows a vertical section of the pushbutton assembly for opening and closing the lid;

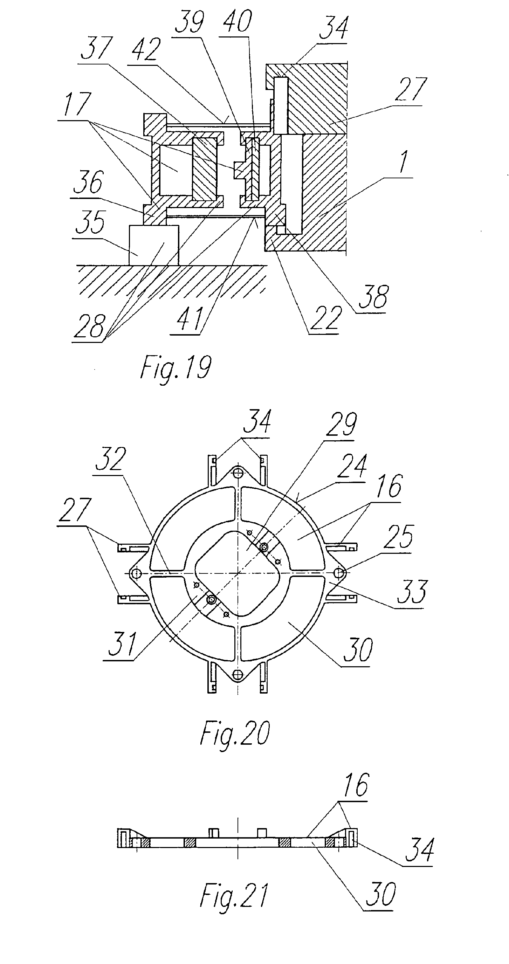

Fig. 19 shows a vertical section of the electronic weighing unit;
Fig. 20 shows a view, from above, of the base of the electronic weighing unit;
Fig. 21 shows an axial cross-section of the same base;

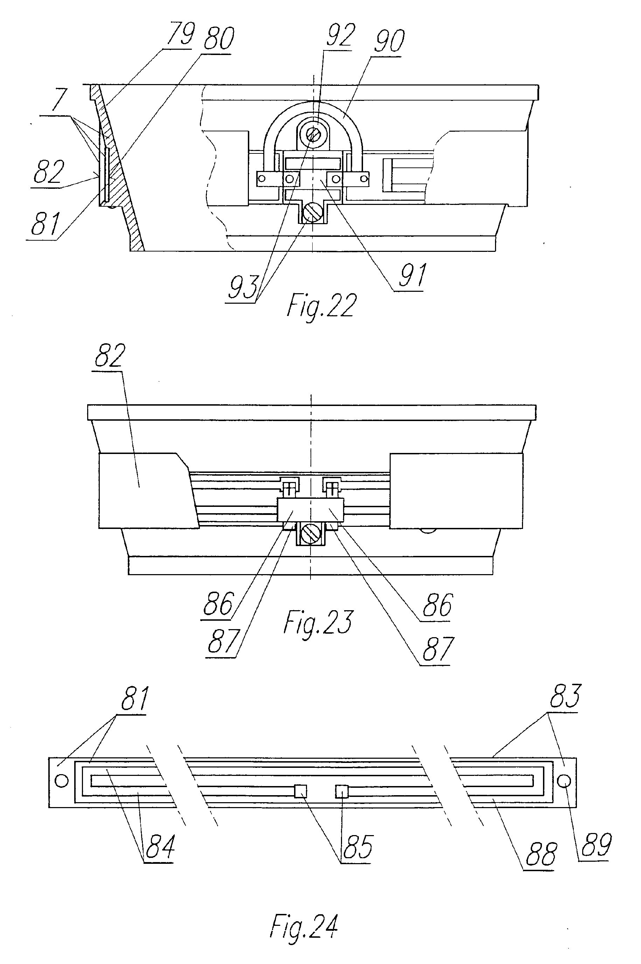

Fig. 22 shows a front view, partially axially sectioned, of the electric resistance unit;
Fig. 23 shows a rear view of the same resistance unit;
Fig. 24 shows a front view of the extension of the surface resistance of the electric resistance unit;

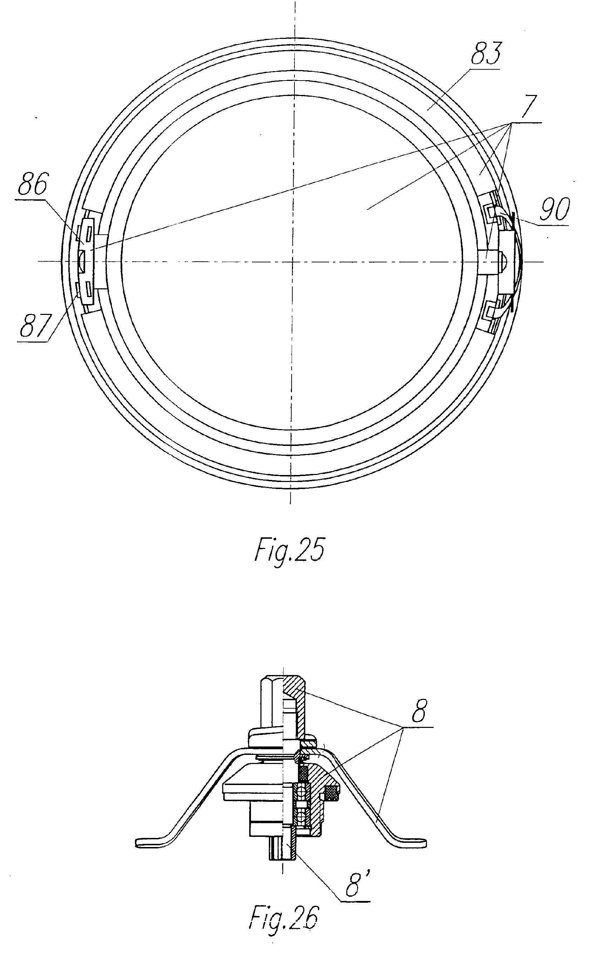

Fig. 25 shows a view, from above, of the same resistance unit;

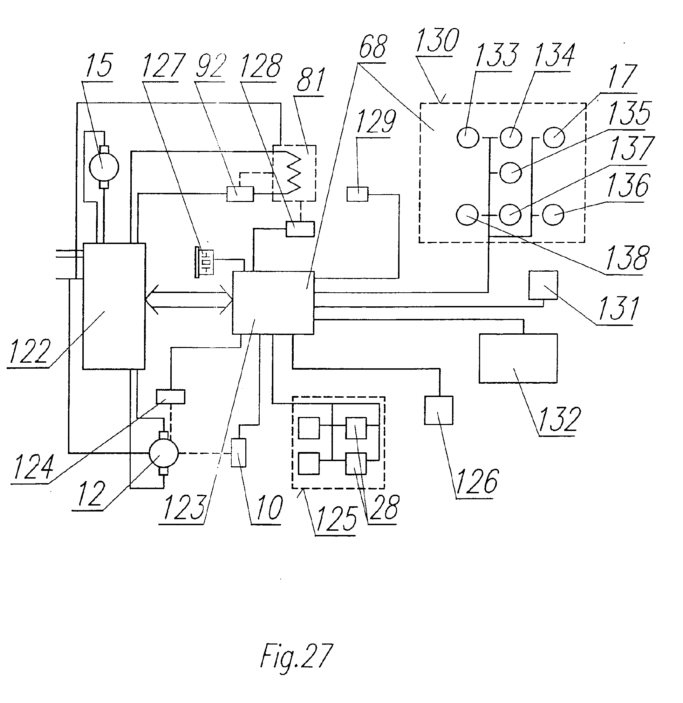

Fig. 26 shows an axial half-sectioned half-view view of the operating unit of the appliance; and
Fig. 27 shows a block diagram of the system controlling operation of the appliance.

The multi-purpose kitchen appliance according to the invention consists of the base 1 joined by means of screws 2 to the casing body 3 provided with a lid 4 which covers the said casing containing inside it the receptacle 6, surrounded at the bottom by the electric resistance unit 7; the operating unit 8 is fixed to the bottom of the said receptacle and its drive shaft is coupled, by means of the clutch 9 and the magnetic pulse emitter 10 connected to the speed sensor 11, to the electric motor 12 fastened to the support 13 of the unit for fixing the said motor and supports of the electric resistance unit 7, while inside the base 1 there is situated the fan 14 moved by a separate electric motor 15 fixed to the base 16 of the electronic weighing unit 17 fixed via a separable joining system to the said base.

The base 1 has a form similar to that of a sectioned spherical cap the bottom of which and the curved side wall of which have, formed therein, four, uniformly arranged, shaped seats 18 inside which the supports 19 fixed thereto by screws 20 are situated; the said seats are surrounded by a cylindrical element 21 with inset portions and lateral fastening devices 22 which are uniformly distributed over its perimeter and provided with mounting holes 22, while inside and around this element the bottom of the base 1 has slits 23.

The front of the cylindrical element 21 of the base 1 and its inset portions support the annular rib 24 of the base 16 of the electronic weighing unit 17, provided with four mounting holes 25 situated in alignment with the mounting holes 22 of the base 1, which bases are joined together by screws 2 which are screwed into the bottom ends of the pins 26.

The electronic weighing unit 17 consists of the base 16 and four identical electronic weighing mechanisms 28 which are mounted in its arms 27. The base 16 has the form of a circular plate with, on its surface a square, axially situated, cut-out 29 and four annular-segment cut-outs 30 forming the outer annular rib 24 as well as the inner annular rib 31 which are connected together by axial ribs 32 situated opposite each other; the outer annular rib 24 has four shaped projections 33 with mounting holes 25 arranged uniformly on its perimeter; each of these projections is situated between two arms 27 situated perpendicularly with respect to the main axes of the base and in pairs opposite each other. These arms have internal recesses 34 inside which the four electronic weighing mechanisms 28 are mounted. Each of the electronic weighing mechanisms 28 is composed of a base 35 on which there rests the support 36 provided with a fixed magnet 37 opposite which there is the support 38 provided with the Hall sensor module 39 and the magnetic screen 40 adjacent thereto; the supports 36 and 38 are joined together by means of flat springs 41 and 42 so that the fixed magnet 37 and the sensor module 39 with its screen 40 are situated in between them, while the support 38 is mounted inside the recesses 34 of the arms 27 of the base 16 of this weighing unit and inside the fastening device 22 of the base 1.

The casing 3 of the appliance has a segmented structure consisting of the bottom outer profile 43 joined by means of the outer central profile composed of two elements 44 and 45 to the upper profile 46. The profiles 43, 44 and 46 are joined together by means of joining elements.

The bottom profile 43 of the casing 3 has a form similar to that of a truncated cone, the generatrix of which is formed by the two concave/convex solids which are joined together at 47 and at the top form an annular element 48 which terminates in an internal flange 49 provided with four mounting holes 50 uniformly distributed on its perimeter and underneath which the top ends of the pins 26 are situated, inside which pins the screws 51 which hold together the support 13, the upper profile 46, the central profile 44 and 45 and the bottom profile 43 are screwed. Moreover, the bottom profile 43 on its internal flange 49 and at the top of its generatrix has a shaped cut-out 52. The internal flange 49 of the bottom profile 43 supports the internal annular element 53 of the central profile composed of two elements 44 and 45, which covers the top part of the bottom profile 43 and the shaped cut-out 52. The rear central profile 44 has the form of the solid formed by the internal annular element 53 with the cut-out 54 and the front closure 55 with the associated shaped wall 56 with the grille 57 projecting on both sides above this element which, in side view, has a concave radial form 58 with a perimetral length decreasing in the direction of the front closure 55; the annular element 53 has four through-holes 59 situated in alignment with the pins 26 by means of which, via the screws 51, the central profile 44 and 45 is joined to the bottom profile 43. The central front profile 45 consists of the segment with an internal shape matching the outer shape of the part of the bottom profile 43 and the outer line formed by two parabolic walls 60 situated opposite each other with open branches 61 joined together by means of the concave wall 62, the rear arms of which are provided with front closing elements 63 which are engaged in the front closing elements 55 of the left-hand central profile 44; the front wall of the profile 45 is provided with a bottom circular hole 64 and upper seat 65 with a shaped hole 66 for the components of the control panel 67 of the system 68 for controlling the appliance.

The upper profile 46 which rests on the annular element 53 of the rear central profile 44 and which is covered partially at the bottom by the shaped walls 56 and 60 of the central profiles 44 and 45 has a form similar to that of a truncated cone which has a slight convexity of its generatrix and the bottom of which has an annular flange 69 with mounting holes 70 situated in alignment with the pins 26 inside which the screws 51 are screwed. Moreover, the upper profile 46 close to the bottom of its generatrix has a shaped hole 71 and on its upper edge has a rectangular cut-out 72 for the handle 73 of the appliance.

The said resistance unit is composed of the sleeve 79 with a profile in the form of a truncated cone having a cylindrical part 80 on the outer surface of which the electric surface resistance 81 protected by a metal screen 82 is fixed. The electric surface resistance 81 consists of a strip 83 having on its surface a resistive track 84 with contact areas in its terminal parts inside which the contacts 86 with connectors 87 are mounted; the track is protected by a perimetral insulation 88. The terminal parts of the strip 83 have holes 89 with which the ends of the tie spring 90 are engaged and, between them, the bimetallic element 91 and the temperature sensor 92 fixed to the sleeve 79 with the aid of screws 93 are situated.

The receptacle 6 is made of stainless steel and its bottom part is fixed permanently to the aluminium external conical element 94 with its bottom part inside the electric resistance unit 7; the bottom of the receptacle has a conical axial seat 95 with an axial hole not shown in the drawing, situated opposite the axial hole 96 of the support 13 inside which the drive shaft 8 of the operating unit 8 is housed.

The support 13 of the electric motor fixing unit and the supports of the electric resistance unit 7 consist of a circular plate with an axial hole 96 and mounting holes 97 on its external perimeter, situated in alignment with the screws 51 and pins 26, while on the upper surface the circular rib 98 supports the bottom edge of the sleeve 79 of the electric resistance unit 7. Moreover, the support 13 between the rib 98 and the axial hole 96 has a bottom, U-shaped, axially offset part 99 with mounting holes inside which the electric motor 12 is mounted by means of the screws 100 and connected by means of the magnetic pulse emitter 10 coupled with the speed sensor 11 of the said motor via a clutch 9 to the operating unit 8 of the appliance. Moreover, the support 13 of the fixing unit is supported by means of adjustable tie rods 101, the lengths of which are adjustable and the bottoms end of which are fastened to the screws 51 and the top ends of which are fastened to the flange 75.

The lid 4 of the appliance rests on the upper surface of the external flange 75 and is fastened by means of lateral hooks 102 and recesses 103; the lid has an axial hole 104 terminating in a ring 105 inside which the bottom part of the receptacle 106 with the external flange adhering to the top edge of the said hole is positioned. Moreover, at the bottom, the said lid has an annular axially offset part 108 situated concentrically with respect to the hole 104 with an internal slit 109 inside which the shaped seal 110 which rests on the perimetral lip of the receptacle 6 is inserted. On the opposite side of the lateral cheeks 102 the lid 4 has a shaped axially offset part 111 situated above the handle 73 and having mounting holes 112 and 113 inside which the pushbutton unit 114 which allows raising upwards of the lid 4 is mounted.

The pushbutton unit 114 is composed of the rod 115 which is mounted inside the hole 112 of the lid and which has, mounted on its upper part, the pushbutton 116, the bottom part of which with the trapezoidal cut-out is mounted together with the fastening device 117 with the inset spring 118 inside the casing 119, the four pins 120 of which situated vertically are inserted inside the remaining said holes 113. In the closed state of the lid, the fastening device 117 biased by the spring 118 is situated inside the lateral slit 121 of the axially offset part 76 of the flange 75 and, when the pushbutton is pressed, the spring 118 is pulled causing the fastening device 117 to slide outside the slit 121, at the same time releasing the lid.

The appliance according to the invention is equipped with commonly known operating elements (not shown in the drawing) which allow kneading, shredding, beating and other similar operations to be performed.

The control system for operation of the appliance 68 is composed of the control module 122 provided with a power supplier connected to the electric motor 12 driving the operating unit 8, to the electric motor of the fan 15, to the surface heating resistance 81 and to its thermal protection 92 and to the electrical connection with the module of the microprocessor 123, the respective inputs of which are connected to the temperature sensor 124 of the electric motor 12, to the speed sensor 11 of the electric motor 12, to the sensor unit 125 of the electronic weighing mechanisms 28, to the sensor 126 detecting the presence of the appliance lid 4, to the acoustic signalling device 127, to the temperature sensor 128 of the electric surface heating resistance 81, to the temperature sensor 129 of the receptacle 6, to the keypad unit 130, to the device for setting the value of the given parameter 131 and to the LCD number and pictogram display 132. The keypad unit 130 comprises keys for program start 133, the electronic weighing unit 17, AUTO pulse and TURBO 134, start/stop 135, timer setting 136, speed setting 137 and heating temperature setting 138.

## Claims

1. The multi-purpose kitchen appliance with heated receptacle, mainly for cooking, kneading, shredding, mincing, beating and preparing creams is composed of a base separable from the casing having, mounted inside it, the weighing unit, the operating unit driven by the motor unit at a number of revolutions which are continuously adjustable, the electric resistance with adjustable heating temperature and is equipped with a panel for controlling operation thereof, **characterized in that** the casing (3) together with its equipment rests on the electronic weighing unit (17), while the operating unit (8) as well as the clutch (9) which couples it to the electric motor (12) are arranged in alignment along a single vertical axis; while the electric resistance unit (7) which surrounds the bottom part of the receptacle (6) is provided with an electric surface heating resistance (81).

2. The multi-purpose kitchen appliance according to Claim 1 is **characterized in that** its casing (3) has a segmented structure consisting of the bottom external profile (43) connected by means of the central profile composed of two parts (44) and (45) to the upper profile (46), inside which the receptacle (6) is housed; the profiles (43), (44), (45) and (46) of the casing (3) being joined together separably.

3. The multi-purpose kitchen appliance according to Claim 1 is **characterized in that** the electronic weighing unit (17) is composed of the base (16) and four identical electronic weighing mechanisms (28) which are inserted in its arms (27); the base (16) has the form of a circular plate with ribs on its surface and with the circular external rib (24) has two pairs of arms (2/) situated perpendicularly with respect to the main axes of the base and in pairs opposite each other provided with internal recesses (34) having, inserted inside them, the four electronic weighing mechanisms (28) composed of a base (35) on which there rests the support (36) provided with a fixed magnet opposite which there is the support (38) provided with the Hall sensor module (39) and the magnetic screen (40) adjacent thereto; the supports (36) and (38) are joined together by means of flat springs (41) and (42).

4. The multi-purpose kitchen appliance according to Claim 1 is **characterized in that** the electric resistance unit is composed of the sleeve (79) with a truncated-cone profile having a cylindrical axially offset part (80) on its external surface to which the electric surface resistance (81) protected by a metallic screen (82) is fixed. The electric surface resistance (81) consists of a strip (83) having on its surface a resistive track (84) with contact areas in its terminal parts in which the contacts (86) provided with connectors (87) are mounted; the track is protected by a perimetral insulation (88). The terminal parts of the strip (83) have holes (89) with which the ends of the tie spring (90) are engaged and between them there is the bimetallic element (91) and the temperature sensor (92) fixed to the sleeve (79).

5. The multi-purpose kitchen apparatus according to Claim 1 is **characterized in that** it has the support (13) for the fixing unit of the electric motor (12) and the supports for the electric resistance unit (7) having an axial hole (96) and a U-shaped perimetral axially offset part (99) with mounting holes for mounting the electric motor (12) connected by means of the magnetic pulse emitter (11) coupled with the speed sensor (10) of the said motor via a clutch (9) to the operating unit (8) of the appliance.

6. The multi-purpuse kitchen appliance according to Claim 1 is **characterized in that** its control system is composed of the control module (122) provided with a power supplier connected to the electric motor (12) driving the operating unit (8), to the electric motor of the fan 15, to the surface heating resistance (81) and its thermal protection (92) and to the electrically connected module of the microprocessor (123), the respective inputs of which are connected to the temperature sensor (124) of the electric motor (12), to the speed sensor (10) of the electric motor (12), to the sensor unit (125) of the electronic weighing mechanisms (28), to the sensor (126) for detecting the presence of the lid (4) of the appliance, to the acoustic signalling device (127), to the temperature sensor (128) of the electric surface heating resistance (81), to the temperature sensor (129) of the receptacle (6), to the keypad unit (130), to the device for entering the value of the given parameter (131) and to the LCD number and pictogram display (132). The keypad unit comprises keys for controlling this system.
